Europäisches Patentamt

European Patent Office

Office européen des brevets

(11) Numéro de publication: **0 101 657**
**A1**

# (12) DEMANDE DE BREVET EUROPEEN

(21) Numéro de dépôt: **83401587.7**

(22) Date de dépôt: **01.08.83**

(51) Int. Cl.³: **A 01 K 5/02**

(30) Priorité: **19.08.82 FR 8214327**

(43) Date de publication de la demande: **29.02.84**
**Bulletin 84/9**

(84) Etats contractants désignés: **AT BE DE GB IT LU NL**

(71) Demandeur: **COTIBAR S.A., Société dite, 15, rue Maréchal de Metz, F-55 002 Bar Le Duc Cedex (FR)**

(72) Inventeur: **Charriau, Joseph, Saint-Etienne De Mer Morte, F-44270 Machecoul (FR)**

(74) Mandataire: **Bourgognon, Jean-Marie et al, Cabinet Flechner 22, Avenue de Friedland, F-75008 Paris (FR)**

(54) **Installation d'alimentation du bétail.**

(57) Elle comprend un distributeur (15) de produit d'alimentation à goulotte (20) de sortie fermée par un dispositif (21 à 23) de fermeture se trouvant à l'extrémité de la goulotte (20).

## Installation d'alimentation du bétail

La présente invention est relative aux installations d'alimentation du bétail du type suivant le préambule de la revendication 1.

Par le EP-A-0029278, on connaît une installation de ce type destinée à donner à chaque animal d'un troupeau la dose d'aliment supplémentaire qui lui convient selon un programme d'alimentation rationnel déterminé. Cette installation comprend, en partie haute, un distributeur, à vis doseuse ou parfois à volet doseur, dont la goulotte de sortie débouche dans une auge prévue en partie basse. L'enveloppe de l'installation la protège de la pluie et des intempéries et ménage un poste d'accès à l'auge pour un animal à la fois. Il s'agit généralement d'une ouverture latérale par laquelle l'animal peut passer la tête. Un ordinateur commande le distributeur en réponse à un signal engendré par le passage d'un élément électronique, porté en collier par l'animal, à proximité d'un élément conjugué monté dans le poste, par exemple sur le pourtour de l'ouverture. L'élément électronique contient un code d'identification de l'animal. A la réception de ce code, l'ordinateur détermine s'il est temps que l'animal reçoive une dose de produit et commande en conséquence le distributeur.

Cette installation fonctionne bien au début. Mais, à la longue, elle ne fournit plus les résultats escomptés. On a même constaté plusieurs intoxications.

On a maintenant compris que la médiocrité des résultats de l'alimentation rationnelle et que les intoxications sont dues au phénomène suivant: l'haleine de l'animal, qui mange dans l'auge, remonte dans la goulotte de sortie du distributeur. Il s'établit peu à peu dans cette goulotte des colonies de moisissures et autres micro-organismes, parfois toxiques, qui sont entraînées vers le bas lors de la chute des doses de produit et qui sont ingurgitées par les animaux à leur plus grand détriment.

L'invention pallie cet inconvénient grave par les dispositions définies à la partie caractérisante de la revendication 1.

Lorsque la goulotte contient la dose prescrite, son extrémité libre inférieure s'ouvre brusquement et temporairement. La dose tombe rapidement dans l'auge. L'élément de fermeture, notamment un volet, referme ensuite immédiatement l'extrémité libre de la goulotte. L'haleine de l'animal, qui mange cette dose, ne peut plus remonter dans la goulotte et y créer les conditions propices à la naissance de moisissures, puisque le dispositif de fermeture est à l'extrémité de la goulotte . Il n'y a plus de tronçon inférieur de goulotte apte à servir de support à des moisissures.

L'haleine de l'animal est néfaste non seulement dans la goulotte, mais, pour la même raison, dans tout le distributeur en partie haute. C'est pourquoi il vaut mieux séparer le distributeur du poste d'une manière étanche aux gaz et à l'humidité, par exemple par une cloison montée de préférence avec des joints d'étanchéité.

Les animaux sont friands de certains suppléments, alors qu'ils délaissent certains produits minéraux, pourtant indispensables en faible quantité à une alimentation équilibrée. Suivant l'invention, on peut réaliser à peu de frais un mélange suffisant d'une quantité d'un produit et d'une quantité moindre d'un autre produit.

L'installation comprend à cet effet deux distributeurs envoyant respectivement leur contenu dans une goulotte commune. L'installation est caractérisée par un dispositif de fermeture de la goulotte monté de manière à la maintenir fermée tant que la quantité de produit d'alimentation qui y est contenue reste inférieure à une première valeur prescrite et par un dispositif n'établissant brusquement la communication entre l'un des distributeurs et la goulotte que lorsque la quantité de produit d'alimentation qui est contenue dans ce distributeur dépasse une seconde valeur prescrite.

Les éléments de fermeture et le dispositif établissant la communication, généralement des volets, jouent ainsi en combinaison avec la goulotte le rôle original de mélangeur. La dose de faible poids de l'un des produits tombe d'abord dans la goulotte où elle est retenue par le volet de la goulotte, car son poids est insuffisant pour repousser ce volet. Lorsque l'autre distributeur s'ouvre brusquement, l'autre produit tombe brusquement dans la goulotte, fait s'ouvrir le volet de celle-ci et entraîne brutalement dans sa chute le produit qui s'y trouve déjà. L'expérience montre que cette chute rapide concomitante donne un mélange suffisant d'un produit appétent et d'un autre qui l'est moins pour que les animaux mangent toute la ration qui leur est proposée sans en délaisser une partie.

Les valeurs L1, L2 prescrites sont telles que le poids P1 + P2 global des deux doses et, de préférence, le poids P2 de la dose la plus grande, soit supérieur ou égal à la première valeur L1 prescrite, que le poids P2 de la dose la plus grande soit supérieur ou égal à la seconde valeur L2 prescrite et que le poids P1 de la dose la plus petite soit inférieur à la première valeur L1 prescrite. En d'autres termes:

$$P1 + P2 \geq L1 \text{ et, de préférence, } P2 \geq L1$$
$$P2 \geq L2$$
$$P1 < L1$$

Aux dessins annexés, donnés uniquement à titre d'exemple:

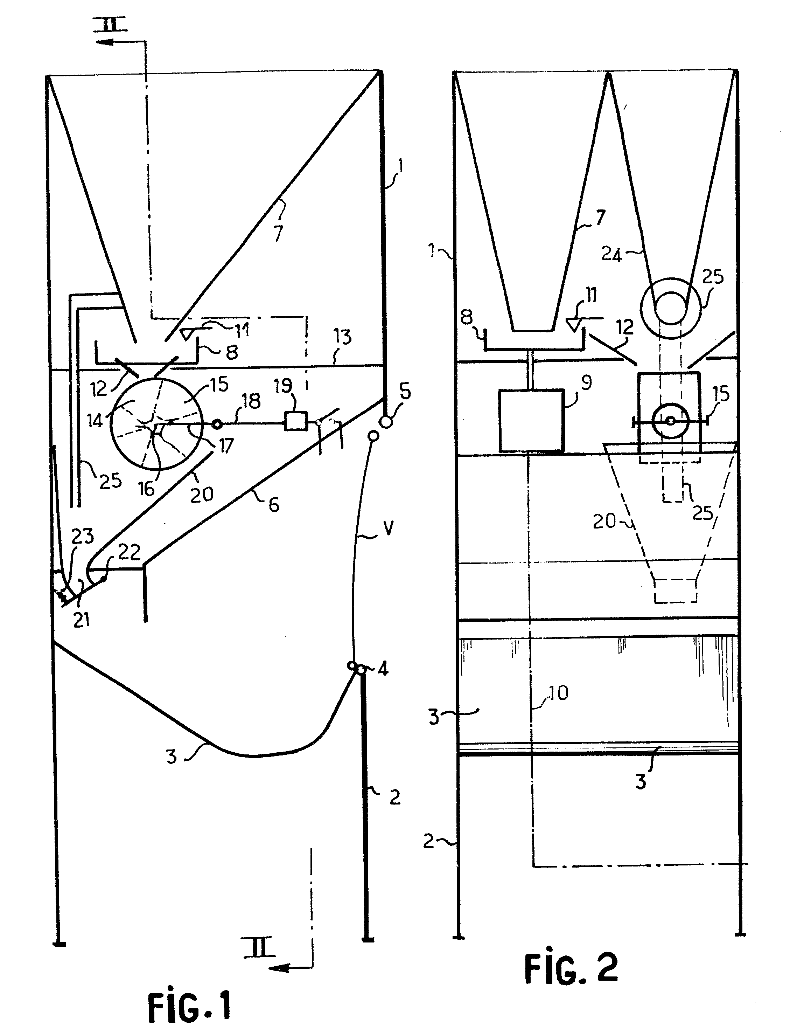

. la figure 1 est une vue en élévation latérale de l'installation suivant l'invention, tandis que

. la figure 2 en est une vue en coupe suivant la ligne II-II de la figure 1.

L'installation comprend une enveloppe 1 de forme générale parallélépipédique, dont le bas repose sur le sol par des pieds 2 et dont le haut est fermé. Une auge 3 est ménagée en partie basse. Une ouverture 4 latérale permet à une vache d'accéder à l'auge 3 par la tête. La vache est symbolisée à la figure 1 par l'élément V électronique, qu'elle porte en collier et qui permet de l'identifier. Cet élément V coopère par induction mutuelle avec un élément 5 conjugué fixé sur le pourtour de l'ouverture 4.

Une cloison 6, étanche aux gaz et à l'humidité, sépare l'auge 3 de la partie haute de l'installation.

Un réservoir 7 de produit d'alimentation du bétail est fixé à l'enveloppe 1 et débouche dans une cuvette 8. La cuvette 8 est entraînée en rotation sur elle-même autour d'un axe vertical par un moteur 9 électrique commandé par un ordinateur (non représenté) par l'intermédiaire d'un circuit 10 électrique de commande. Un doigt 11, monté fixe sur l'enveloppe 1, pénètre dans la cuvette 8 à proximité du pourtour de celle-ci. Quand la cuvette 8 tourne, le doigt 11 provoque le débordement du produit qui y est contenu dans une trémie 12 placée en dessous de la cuvette 8. Cette trémie 12 est montée sur une cloison 13 hozizontale qui améliore encore l'étanchéité entre le réservoir 8 et la cuvette 7 d'une part et l'auge 3 d'autre part.

La trémié 12 débouche vers le bas au-dessus de l'un des godets 14 d'une roue 15 à six godets répartis de manière équidistante sur le pourtour de la roue et s'ouvrant vers l'extérieur. La roue 15 est montée folle sur un axe 16 horizontal solidaire de l'un des fléaux 17 d'une balance dont l'autre fléau 18 porte une tare 19 telle que, lorsque 100 grammes de produit sont tombés dans le godet 14, le fléau 17 s'abaisse et la roue 15, échappant par ce mouvement à une butée (non représentée) qui l'empêchait de tourner dans le sens trigonométrique, tourne dans ce sens en raison du balourd créé par les 100 grammes de produit. Le godet 13 passe en une position basse, dans laquelle il déverse brusquement et d'un coup son contenu dans une goulotte 20.

L'extrémité inférieure de la goulotte 20 est fermée par un volet 21, qui est monté pivotant autour d'un axe 22 et qui est maintenu en position de fermeture par un ressort 23. Le ressort 23 est taré de manière à se relâcher lorsqu'il est soumis à une force supplémentaire de 100 grammes.

Un second réservoir 24 d'un produit minéral est monté à côté du réservoir 7 et est associé à un distributeur 25 classique, qui envoie une dose de 10 grammes de produit dans la goulotte 20.

L'installation fonctionne de la manière suivante:

Une vache se présente devant l'auge 3. Le passage de l'élément V devant l'élément 5 permet à l'ordinateur d'identifier la vache et de décider si elle doit recevoir une ration alimentaire.

Dans l'affirmative, l'ordinateur commande le fonctionnement du distributeur 25 d'une part et du moteur 9 d'autre part. 10 grammes (P1) de produits minéraux provenant du réservoir 24 tombent immédiatement dans la goulotte 20. Ils y restent, car ce poids est insuffisant pour ouvrir le volet 21 à l'encontre de la force (L1) appliquée par le ressort 23. Peu après, soit parce que la commande de l'ordinateur est retardée en conséquence, soit parce que l'opération dure plus longtemps en raison de la durée de la pesée, 100 grammes (P2) de produit provenant du réservoir 7 tombent, en passant par la cuvette 8 et le godet 14, dans la goulotte 20, puisque la balance fonctionne en distributeur de doses dès que le poids contenu dans le godet atteint ou dépasse une valeur (L1). Ce poids suffit pour faire pivoter le volet 21 à l'encontre du ressort 23 et ouvrir l'extrémité inférieure de la goulotte 20. Les 100 grammes (P2) de produit entraînent dans leur chute dans l'auge les 10 grammes (P1) qui se trouvaient déjà dans la goulotte. Cette chute concomitante des produits les mélange suffisamment pour que la vache ne délaisse aucune partie de la ration qui lui est proposée.

Dès que les 110 grammes sont tombés, le volet 21 se referme. L'haleine de la vache ne peut pas remonter dans la goulotte 20. L'haleine ne peut pas non plus remonter dans la partie haute de l'installation en raison de la présence des cloisons 6 et 13.

Bien entendu, le mode de réalisation représenté et décrit n'est donné qu'à titre d'exemple et peut être modifié. C'est ainsi que le volet 21 peut être monté vertical et être maintenu en position de fermeture par son propre poids, ce qui permet de se dispenser du ressort 23.

REVENDICATIONS

1. Installation d'alimentation du bétail, comprenant un distributeur (15) de produit d'alimentation à goulotte (20) menant à une auge (3) et un dispositif (21 à 23) de fermeture de la goulotte destiné à maintenir celle-ci fermée tant que la quantité de produit d'alimentation qui y est contenue reste inférieure à une valeur prescrite, caractérisée en ce que la goulotte (20) débouche directement dans l'auge (3) et le dispositif de fermeture (21 à 23) ferme la goulotte (20) à l'extrémité par laquelle elle débouche directement dans l'auge (3).

2. Installation suivant la revendication 1, caractérisée en ce que le dispositif de fermeture comprend un volet (21) maintenu en position de fermeture de la goulotte (20) par un ressort (23) ou par son propre poids.

3. Installation suivant la revendication 1 ou 2, comprenant une enveloppe (1) pour le distributeur définissant un poste dans lequel un animal peut accéder à l'auge (3) recevant le contenu de la goulotte (20), caractérisée par des moyens (6,13) pour rendre le distributeur étanche par rapport au poste.

4. Installation suivant la revendication 3, caractérisée en ce que les moyens d'étanchéité comprennent une cloison (6) séparant le distributeur en partie haute du poste en partie basse.

5. Installation d'alimentation du bétail, comprenant deux distributeurs (15,25) de produits d'alimentation différents envoyant leur contenu dans une goulotte (20) commune, caractérisée par un dispositif (21 à 23) de fermeture de la goulotte monté de manière à la maintenir fermée tant que la quantité de produit d'alimentation qui y est contenue reste

2    0101657

inférieure à une première valeur prescrite et par un dispositif (14) n'établissant brusquement la communication entre l'un des distributeurs (15) et la goulotte (20) que lorsque la quantité de produit d'alimentation qui est contenue dans ce distributeur dépasse une seconde valeur prescrite.

6. Installation suivant la revendication 5, caractérisée en ce que les poids P1 et P2 des doses fournies par les distributeurs et les première et seconde valeurs L1 et L2 prescrites satisfont aux relations:

$$P2 \geq L2$$
$$P1 < L1 \leq P2$$

0101657

FIG.1

FIG.2

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | EP-A-0 029 278 (BRINKMANN & NIEMEYER) <br> * Figures 1-4; page 5, ligne 5 - page 6, ligne 16 * | 1-5 | A 01 K 5/02 |
| Y | DE-B-1 205 756 (ICKING) <br> * Figures 6,7; colonne 9, ligne 53 - colonne 10, ligne 21; figures 11,12; colonne 11, lignes 28-50 * | 1 | |
| A | GB-A- 405 657 (HICKS) <br> * Page 1, lignes 64-73; figure 1 * | 5 | |
| | ----- | | |

**DOMAINES TECHNIQUES RECHERCHES (Int. Cl. ³)**

A 01 K

Le présent rapport de recherche a été établi pour toutes les revendications

| Lieu de la recherche | Date d'achèvement de la recherche | Examinateur |
|---|---|---|
| LA HAYE | 25-11-1983 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82